# EUROPEAN PATENT SPECIFICATION

(11) **EP 3 795 387 B1**
(45) Date of publication and mention of the grant of the patent: **07.06.2023**
(21) Application number: 19847838.0
(22) Date of filing: 17.07.2019
(51) Int. Cl.: B60C 11/03, B60C 11/11, B60C 11/13

(54) **MOTORCYCLE TIRE**
MOTORRADREIFEN
PNEU DE MOTOCYCLETTE

(30) Priority: 09.08.2018 JP 2018150850
(43) Date of publication of application: 24.03.2021
(73) Proprietor: Bridgestone Corporation, Chuo-Ku Tokyo 104-8340 (JP)
(72) Inventor: OKI, Hiroyuki, Tokyo 104-8340 (JP); HAGIWARA, Kazumasa, Tokyo 104-8340 (JP)
(74) Representative: Marks & Clerk LLP
(86) International application number: PCT/JP2019/028132
(87) International publication number: WO 2020/031641

(56) References cited:
- EP-A1- 2 423 006
- JP-A- 2005 199 927
- JP-A- 2006 273 052
- JP-A- 2007 112 396
- JP-A- 2010 023 585
- JP-A- 2012 011 953
- JP-A- 2013 082 350
- JP-A- 2013 249 014
- JP-A- 2015 134 578
- JP-A- 2015 147 546

## Description

### TECHNICAL FIELD

The invention relates to a motorcycle tire, specifically, a motorcycle tire configured to suppress generation of uneven wear in the use of the tire on paved road surfaces without deteriorating steering stability on rough terrain surfaces and the paved road surfaces.

### BACKGROUND

A generally employed motorcycle tire mainly used for running on a rough terrain has a plurality of land portions on the tread, divided by a plurality of grooves to secure running performance such as the steering stability on the rough terrain.

For example, a motorcycle tire as disclosed in Patent Literature 1 improves durability of the land portion by making inclination of the side wall of the land portion at a step-in side steeper than that of the side wall of the land portion at a kick-out side for maintaining good running performance achieved by the land portions under running conditions of a bad road, for example, for motocross competitions. Attention is also drawn to the disclosures of EP2423006A1 and JP2015-134578A, wherein EP2423006A1 discloses a motorcycle tire having a specified rotation direction, including one or more land portions on a center part of the tire occupying 50% of a length of the tire on a tread surface of the tire along a periphery of the tread surface, the one or more land portions divided by a plurality of width direction grooves extending in a tire width direction and a plurality of circumferential direction grooves extending in a tire circumferential direction, the center part having an equatorial plane of the tire as a center of the center part, wherein at least one of the land portions having in a circumferential cross section of the tire, a maximum height of the land portion in a tire radial direction. From this document a reference point on the land portion surface and corresponding distances from said point to the kick-out side of the land portion in the circumferential direction of the tire can be derived as mentioned in claim 1 of the present invention.

### CITATION LIST

### Patent Literature

PTL 1: Japanese Patent Laid-Open No. 2007-112396

### SUMMARY

### Technical Problem

The tire for running on the rough terrain may also be used for running in urban areas, or on the paved road located between the rough terrains. The foregoing usage environment, especially running especially on the paved road surface, makes the land portion of the tire, which is suitable for running on the rough terrain, as disclosed in Patent Literature 1 subject to uneven wear.

It is an object of the invention to provide the motorcycle tire for suppressing generation of the uneven wear in the use on the paved road surface without deteriorating steering stability on the rough terrain surface and the paved road surface.

### Solution to Problem

Having been working to solve the foregoing problem, the inventor has obtained findings to be described below. Generally, the motorcycle tire has a semi-circular cross-section with curvature larger than that of the tire for the four-wheeled vehicle. Thus, the center part of the tread of the tire is grounded when straight running or braking on the paved road surface. Especially, the preferential wear is likely to occur in the land portion disposed on the center part of the tread in one circumferential side of the tire. The inventor has further found out that adaptive formation of the side wall extending in the direction intersecting the circumferential direction of the land portion allows prevention of the preferential wear to suppress generation of the uneven wear, leading to the present disclosure.

The motorcycle tire of the invention is provided as claimed in claim 1.

The "pattern pitch" described herein stands for the tire circumferential direction length per unit of the tread pattern to be formed in a tire circumferential direction repeatedly. If the tire circumferential direction length per unit of the pattern changes in the tire circumferential direction, the average length may be referred to as the pattern pitch.

### Advantageous Effect

The invention provides the motorcycle tire for suppressing generation of the uneven wear in the use on the paved road surface without deteriorating the steering stability on the rough terrain surface and the paved road surface.

### BRIEF DESCRIPTION OF THE DRAWINGS

In the accompanying drawings:
FIG. 1 illustrates a part of a tread surface of a tire according to an embodiment of the invention, which is developed in a tire width direction;
FIG. 2 is a sectional view taken along line II-II of FIG. 1; and
FIG. 3 illustrates a state of the uneven wear which has been generated on the land portion.

### DETAILED DESCRIPTION

A motorcycle pneumatic tire (hereinafter simply referred to as "tire") according to the invention will be described in detail referring to the drawings with reference to an exemplary embodiment.

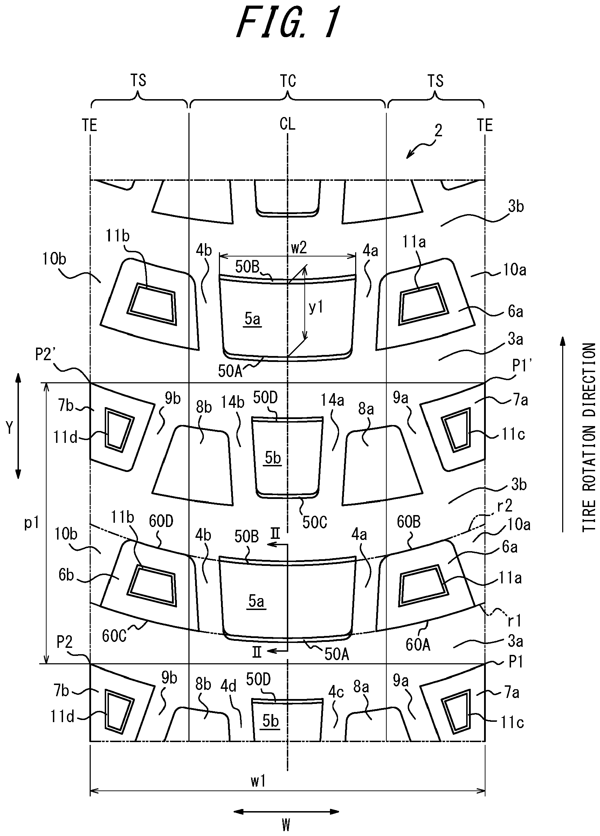

FIG. 1 illustrates a part of a tread surface 2 of a tire 1 according to an embodiment of the invention, which is developed in a tire width direction. Although not shown in the drawing, the tire 1 includes a carcass extending across a pair of beads, serving as a frame, a pair of side walls each at an outer side in a tire radial direction of the bead, and a tread extending across the side walls.

The tire 1 is structured to have its rotation direction specified to an arrowed direction as shown in the drawing. A center part TC occupies 50% of a region with a tire width direction length w1 of the tread surface 2 of the tire 1 along its periphery, having an equatorial plane of the tire as a center, in the tire 1. In the illustrated example, sections closer to tread edges TE than the center part TC are shoulder parts TS. The center part TC includes a plurality of land portions 5a and 5b, which are divided by a plurality of width direction grooves, 3a, 3b in the illustrated example, each extending in a tire width direction W, and a plurality of circumferential direction grooves, 4a, 4b, 14a and 14b in the illustrated example, each extending along the tire circumferential direction and communicating with the width direction grooves 3a, 3b.

The structure of the land portions 5a, 5b will be described, taking the land portion 5a as a typical example.

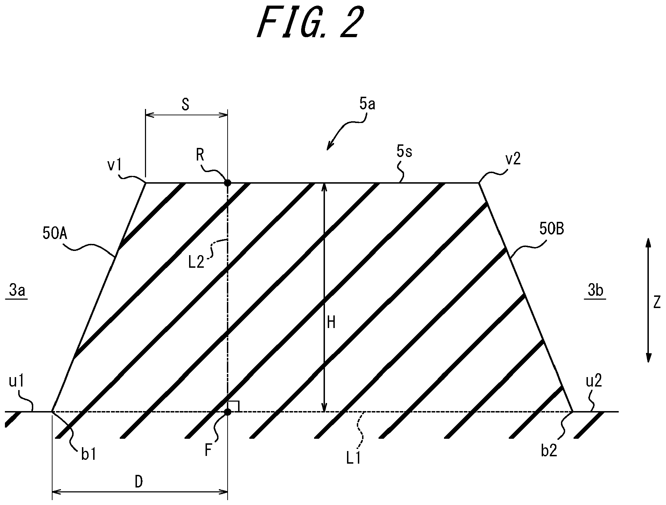

FIG. 2 is a sectional view taken along line II-II of FIG. 1, illustrating a cross-section along a tire circumferential direction Y. FIG. 2 depicts a maximum height H of the land portion 5a in a tire radial direction Z. The maximum height H of the land portion 5a stands for a maximum distance from bottom parts u1, u2 to a surface 5s. A reference point R is set as a point 0.45H apart from an end edge v1 at a kick-out side of the surface 5s of the land portion 5a in the tire rotation direction toward an end edge v2 at a step-in side. A distance S is set as a distance from the reference point R to the end edge v1 on the surface 5s of the land portion 5a. A virtual line L1 is set as the shortest line for connecting a boundary b1 between a side wall 50A at the kick-out side facing the width direction groove 3a and the bottom part u1 of the width direction groove 3a, and a boundary b2 between a side wall 50B at the step-in side facing the width direction groove 3b and the bottom part u2 of the width direction groove 3b. A distance D is set as a distance from a foot F of a section L2 which passes through the reference point R and is perpendicular to the virtual line L1 to the boundary b1 at the side of the end edge v1. The distance D and the distance S are required to satisfy the relation D≥1.7S. In the illustrated example, the side walls 50A and 50B are straight lines. If each of the side walls contains an arced part toward the bottom parts u1 and u2, the boundaries between extended lines from the straight lines and the bottom parts u1 and u2 may be set as the boundaries b1 and b2, respectively.

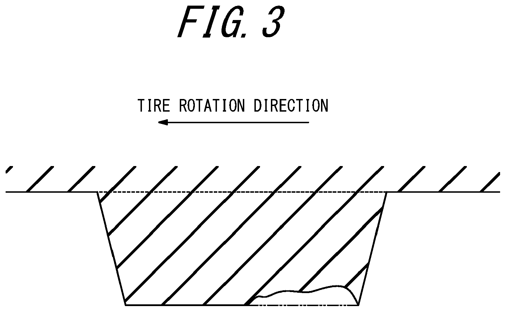

Functions derived from the above-described structure will be described below. When the motorcycle is running straight, the land portion of the tire 1 grips against the road surface to exhibit traction performance, causing shear deformation in the land portion. As the load applied to the land portion is decreasing at the kick-out side of the land portion, a sliding phenomenon is generated by the shear deformation on the road surface at an end of the land portion at the kick-out side. The sliding phenomenon then causes the preferential wear in the end edge of the land portion at the kick-out side, as shown in FIG. 3. As a result of study on the region where the preferential wear occurs, the inventor has obtained findings to be described below. Assuming that the land portion 5a has the maximum height H, the preferential wear occurs in a region from the end edge v1 on the surface 5s at the kick-out side to the reference point R 0.45H apart from the end edge v1. As a result of study on elimination of the preferential wear based on the findings, the inventor adds a skirt with a length of 1.7S or longer to the distance S on the surface 5s of the region where the preferential wear has occurred so as to improve rigidity of the region where the preferential wear has occurred. The stress against the shear deformation of the land portion 5a in the tire circumferential direction is enhanced to avoid generation of the sliding phenomenon on the road surface at the end of the land portion, resulting in suppression of the uneven wear caused by the sliding phenomenon.

By setting the distance D to preferably 1.8S or longer, and more preferably, 2.0S or longer, rigidity of the region where the preferential wear has occurred may be further enhanced so as to suppress the uneven wear caused by the sliding phenomenon.

The distance D is not limited to the specific dimension. However, it is preferable to set the distance D to 30 mm or shorter in light of preventing interference with other blocks.

The structure at around the end edge v2 at the step-in side as an opposite side of the end edge v1 at the kick-out side may be formed arbitrarily in a non-restrictive manner. It is possible to enhance rigidity of the land portion 5a at the end edge v2 by setting the reference point 0.45H apart from the end edge v2 in the similar manner to the structure at around the end edge v1.

In the embodiment, the land portions 5a and 5b may be formed to have arbitrary dimensions. The land portion 5a will be described below as an exemplified case.

Preferably, the maximum height H of the land portion 5a is ranged from 8 mm to 13 mm inclusive. By setting the maximum height H to 8 mm or higher, it is possible to effectively suppress generation of the sliding phenomenon. By setting the maximum height H to 13 mm or lower, it is possible to impart sufficient rigidity to the land portion 5a. More preferably, the maximum height H is ranged from 9 mm to 13 mm inclusive.

Preferably, a maximum length y1 of the surface 5s of the land portion 5a in the tire circumferential direction Y is ranged from 10 mm to 55 mm inclusive. By setting the maximum length y1 to 10 mm or longer, it is possible to impart sufficient rigidity to the land portion 5a so that the steering stability is improved. By setting the maximum length to 55 mm or shorter, it is possible to maintain the drainage performance and the soil removing performance. Preferably, the maximum length is ranged from 15 mm to 50 mm inclusive, and more preferably, from 20 mm to 45 mm inclusive.

Preferably, a maximum length w2 of the land portion 5a along the periphery of the tread surface 2 in the width direction accounts for 10% to 35% inclusive of the width direction length w1 along the periphery of the tread surface 2. By setting the maximum length w2 to 10% or longer of the width direction length w1, it is possible to impart sufficient rigidity to the land portion 5a so that the steering stability is improved. By setting the maximum length to 35% or shorter, it is possible to maintain the drainage performance on the paved road surface.

In the illustrated example, the maximum length of the land portion 5a in the tire width direction W is different from that of the land portion 5b in the tire width direction W in light of balance between the drainage performance and rigidity. However, the maximum length of the land portion 5a may be made the same as that of the land portion 5b.

The tire according to the invention may be structured arbitrarily in a non-restrictive manner. An exemplified case of this embodiment will be further described in detail with reference to FIG. 1 and FIG. 2.

As FIG. 1 illustrates, preferably, the side wall 50A at the kick-out side is arced while making a convex shape to the outside of the land portion 5a toward the kick-out side in the tire rotation direction, and the side wall 50B at the step-in side is arced while making the convex shape to the inside of the land portion 5a toward the kick-out side in the tire rotation direction. The foregoing structure can effectively suppress the uneven wear of the side wall 50A at the kick-out side. The side wall 50B at the step-in side is arced while making the concave shape to the tire rotation direction. On the rough terrain surface, the foregoing structure effectively catches soil and mud on the road surface to improve the gripping performance against the road surface.

In the illustrated example, the side walls 50A and 50B each with the same radius of curvature extend in the tire width direction W. However, it is possible to make the radius of curvature different between the side walls 50A and 50B so that the width of the land portion in the tire circumferential direction Y is gradually increased or decreased from the tire equatorial plane CL toward the tread edges TW.

In the illustrated example, the land portion 5b includes side walls 50C and 50D which face the width direction grooves 3b and 3a, respectively. Likewise the case of the side walls 50A and 50B, the kick-out side or/and the step-in side in the tire rotation direction of each of the side walls 50C and 50D may be arced while making the convex shape to the kick-out side or the step-in side. Likewise the case of the land portion 5a, it is preferable to form the side wall 50C at the kick-out side into the arc shape while making the convex shape to the kick-out side in the tire rotation direction.

Preferably, the number of the land portions each having the arced side walls accounts for 30% or more of the total number of the land portions disposed on the center part TC over the entire circumference of the tire 1. In the example, preferably, the number of the land portions 5a each having arced side walls 50A, 50B, and the land portions 5b each having arced side walls 50C, 50D accounts for 30% or more of the total number of the land portions disposed on the center part TC. The land portions other than the land portions 5a and 5b may be disposed on the center part TC. It is assumed that the number of only the land portions disposed in entirety on the center part TC may be counted. Especially, the ground contact pressure on the center part TC is likely to be increased. It is important to suppress the uneven wear and improve the grip performance against the road surface by disposing the fixed number or more of the land portions each having arced side walls. Preferably, the number of such land portions accounts for 40% or more, and more preferably, all the land portions 5a and 5b disposed on the center part TC have arced side walls. In the illustrated example, only the land portions 5a and 5b are disposed in entirety on the center part TC, and all the land portions have the arced side walls.

Referring to FIG. 1, the shoulder parts TS include shoulder land portions 6a and 6b, respectively divided by the width direction grooves 3a and 3b, which extend in the tire width direction W, and the circumferential direction grooves 4a, 4b, 10a and 10b, which extend in the tire circumferential direction Y. The shoulder land portions 6a and 6b are disposed adjacent to both sides of the land portion 5a, respectively. Side walls 60A and 60C of the shoulder land portions 6a and 6b, which face the width direction groove 3a, respectively, extend on the same arc of the side wall 50A, that is, an arc r1. Side walls 60B and 60D of the shoulder land portions 6a and 6b, which face the width direction groove 3b, respectively, extend on the same arc of the side wall 50B, that is, an arc r2. In the foregoing structure, the land portions on the same arc are integrally grounded on the road surface along the arc so that the gripping performance against the road surface is improved.

In the illustrated example, the shoulder parts TS include shoulder land portions 8a and 8b divided by the width direction grooves 3a and 3b, and the circumferential direction grooves 14a, 14b, 9a and 9b each extending in the tire circumferential direction Y, respectively, and shoulder land portions 7a and 7b divided by the width direction grooves 3a and 3b, the circumferential direction grooves 9a and 9b each extending in the tire circumferential direction Y, and the tread edges TE, respectively.

Each shape of the side walls of the shoulder land portions 6a, 6b, 7a, 7b, 8a and 8b, each facing the width direction groove is not specifically limited. However, likewise the case of the land portions 5a and 5b, the inclination angle may be specified.

Among the shoulder land portions, the shoulder land portions 6a, 6b, 7a and 7b may have shallow grooves 11a, 11b, 11c and 11d, respectively in the tread surface. In the example, the shallow groove stands for the groove having its groove width and groove depth relatively smaller than those of the grooves for dividing the land portion. Preferably, the shallow groove has its maximum groove width ranged from 0.1 mm to 2.0 mm inclusive, and more preferably from 0.5 mm to 1.5 mm inclusive, and its maximum groove depth ranged from 0.1 mm to 2.0 mm inclusive, and more preferably from 0.2 mm to 0.5 mm inclusive. The shallow groove formed in the surface of the shoulder land portion improves the drainage performance on the paved road surface in an initial stage of using the tire.

As illustrated, the land portion 5a, the shoulder land portions 6a and 6b are disposed linearly symmetrically with the tire equatorial plane CL as an axis in light of the steering stability. Similarly, the land portion 5b, the shoulder land portions 7a, 7b, 8a and 8b are disposed linearly symmetrically with the tire equatorial plane CL as the axis. However, it is possible to dispose those portions in differently shaped arrangement at different phase with respect to the tire equatorial plane CL.

Preferably, the number of the land portions disposed between the width direction grooves 3a and 3b across the tread edges TE is ranged from 1 to 7 inclusive, more preferably, from 2 to 6 inclusive, and further preferably, from 3 to 5 inclusive. The drawing illustrates the exemplified case having a row of three land portions interposed between the width direction grooves 3a and 3b, that is, the land portions 5a, 6a, 6b, and another row of five land portions interposed between the width direction grooves 3b and 3a, that is, the land portions 5b, 7a, 7b, 8a, 8b. By setting the lower limit number of the land portions to be disposed between a pair of width direction grooves, it is possible to improve the gripping performance against the road surface as well as riding comfort while running on the paved road surface. By setting the upper limit number of the land portions as described above, it is possible to exhibit the drainage performance and the soil removing performance on the tread surface.

On the center part TC, the area except the areas of the surfaces of the land portions accounts for 50% to 65% inclusive of the total area on the tread surface 2 in a planar view. As the drawing illustrates, on the center part TC, the land portions 5a and 5b are disposed, and the shoulder land portions 6a, 6b, 8a and 8b partially exist. The rate of the area of the land portions which partially exist on the center part TC will be calculated using the area of the surfaces on the center part TC. As the rate of the area except the areas of the surfaces of the land portions to the total area is specified to 50% or higher, it is possible to maintain the running performance on the rough terrain surface such as the steering stability. As the rate is specified to 65% or lower, it is possible to exhibit the gripping performance against the paved road surface, and maintain the steering stability.

Preferably, 12 or more pattern pitches are provided on the tire 1 in the tire circumferential direction Y. The single pattern pitch stands for, for example, a tire circumferential direction length p1 between a line formed by connecting points P1 and P2 and a line formed by connecting points P1' and P2' in the tire 1. Each of the points P1 and P2 of end edges of the land portions 7a and 7b, each facing the width direction groove 3a is the closest to the tread edge TE. Each of the points P1' and P2' of end edges of the firstly disposed land portions 7a and 7b in the tire circumferential direction Y, each facing the width direction groove 3a is the closest to the tread edge TE. Twelve or more pattern pitches as described above are provided repeatedly in the tire circumferential direction Y. The foregoing structure can exhibit the gripping performance especially against the paved road surface, and improve the steering stability. It is preferable to provide 14 or more pattern pitches.

A size of the tire 1 according to the invention will be exemplified in a non-restrictive manner. Preferably, the tire 1 has its total width ranged from 120 mm to 180 mm inclusive, an aspect ratio ranged from 60% to 90% inclusive, and a rim diameter ranged from 14 inches to 18 inches inclusive, for example.

It is preferable to mount the tire 1 on a rear wheel of the motorcycle. Mounting of the tire on the rear wheel of the motorcycle improves the effect of suppressing the uneven wear.

### EXAMPLE

An example according to the invention will be described in the non-restrictive manner.

Tires each having the size of 110/80B19, and the negative ratio of the center part set to 60.3% were produced experimentally as examples of the invention and comparative examples based on specifications indicated by a table 1 so as to evaluate the respective items.

Each of the produced tires was assembled with the wheel with 19-inch rim size, and then mounted on the rear wheel of a 1200 cc motorcycle at an internal pressure of 220 kPa. The generally employed tire was employed for the front wheel. The tire for the front wheel has the size of 110/80B19 at the internal pressure of 250 kPa.

### (Uneven wear resistance)

Test runs of the respective motorcycles mounted with tires as a comparative example 1 and an example 1 were carried out for running 400 km on the test course. A depth gauge was prepared to measure the wear amount of the end edge at the kick-out side for the uneven wear of the land portions of the center part and the shoulder parts of the tire after the test run, with reference to the end edge at the step-in side. Test runs of the respective motorcycles mounted with tires as a comparative example 2 and examples 2 to 5 were carried out for running 400 km on the test course. The depth gauge was prepared to measure the wear amount of the end edge at the kick-out side for the uneven wear of the land portions of the center part and the shoulder parts of the tire after the test run, with reference to the end edge at the step-in side. The result is expressed as the ratio of the height at the kick-out side to the value 100 corresponding to the reference height of the land portion at the step-in side. The larger value indicates more enhanced uneven wear resistance.

**(Table 1)**

| | | REMARKS | Comparative example 1 | Comparative example 2 | Example 1 | Example 2 | Example 3 | Example 4 | Example 5 |
|---|---|---|---|---|---|---|---|---|---|
| Land portion (center part) | Kick-out side | Height H (mm) | 10.2 | 10.2 | 10.2 | 10.2 | 10.2 | 9.3 | 12.8 |
| | | Distance S (mm) | 4.6 | 4.6 | 4.6 | 4.6 | 4.6 | 4.2 | 5.8 |
| | | Distance D (mm) | 7.3 | 7.3 | 9.3 | 9.3 | 8.3 | 8.4 | 11.5 |
| Land portion (shoulder part) | Kick-out side | Height H (mm) | 10.2 | 10.2 | 10.2 | 10.2 | 10.2 | 9.3 | 12.8 |
| | | Distance S (mm) | 4.6 | 4.6 | 4.6 | 4.6 | 4.6 | 4.2 | 5.8 |
| | | Distance D (mm) | 7.3 | 9.3 | 7.3 | 9.3 | 8.3 | 8.4 | 11.5 |
| Uneven wear amount of land portion on the center part | | | 95.3 | 95.1 | 99.8 | 99.8 | 99.7 | 99.9 | 99.5 |
| Uneven wear amount of land portion on the shoulder part | | | 96.0 | 98.9 | 96.2 | 99.0 | 99.0 | 99.1 | 98.9 |

### REFERENCE SIGNS LIST

1 tire
2 tread surface
3a,3b width direction groove
4a,4b, 14a,14b circumferential direction groove
5a,5b land portion
5s surface
6a,6b,7a,7b,8a,5b shoulder land portion
9a,9b,10a,10b circumferential direction groove
11a,11b,11c,11d shallow groove
50A,50B,50C,50D,60A,60B,60C,60D side wall
u1,u2 bottom
b1,b2 boundary
v1,v2 end edge
L1 virtual line
L2 perpendicular line
F foot of a perpendicular line
H maximum height of a land portion
R reference point
S,D distance
r1,r2 arc

## Claims

1. A motorcycle tire (1) having a rotation direction specified, the motorcycle tire (1) including one or more land portions (5a, 5b) on a center part (TC) of the tire (1) occupying 50% of a length of the tire (1) on a tread surface (2) of the tire (1) along a periphery of the tread surface (2), the one or more land portions (5a, 5b) divided by a plurality of width direction grooves (3a, 3b) extending in a tire width direction and a plurality of circumferential direction grooves (4a, 4b, 14a, 14b) extending in a tire circumferential direction, the center part (TC) having an equatorial plane (CL) of the tire (1) as a center of the center part (TC), wherein
at least one of the land portions (5a) is configured such that, in a circumferential cross-section of the tire (1),
wherein H is a maximum height of the land portion (5a) in a tire radial direction, and a reference point (R) is set as a point 0.45H apart from an end edge (v1) at a kick-out side toward a step-in side on a surface of the land portion (5a) in the rotation direction,
a relation D≥1.7S is satisfied, where
S is a distance from the reference point (R) to the end edge (v1) at the kick-out side on the surface of the land portion (5a), and
D is a distance to a boundary (b1) at the kick-out side, among boundaries, from a foot (F) of a perpendicular line that is a section (L2) which passes through the reference point (R) and is perpendicular to a virtual line (L1) set as the shortest line connecting a first boundary (b1) and a second boundary (b2), the first boundary (b1) being between one side wall (50A) of the land portion (5a) at the kick-out side and a bottom part (u1) of the plurality of width direction grooves (3a, 3b), the second boundary (b2) being between other side wall (50B) of the land portion (5a) at the step-in side and the bottom part (u2) of the plurality of width direction grooves (3a, 3b), both the side walls (50A, 50B) facing respective width direction grooves (3a, 3b), the bottom parts (u1, u2) being of the width direction grooves (3a, 3b) respectively, and
wherein an area of the center part (TC) except the areas of the surfaces of the land portions (5a, 5b) accounts for 50% to 65% inclusive of a total area of the center part (TC) in a planar view.

2. The motorcycle tire (1) according to claim 1, wherein a maximum length of the surface of the land portion (5a) in the tire circumferential direction is ranged from 10 mm to 55 mm inclusive.

3. The motorcycle tire (1) according to claim 1 or 2, wherein the side wall (50A, 50C) at the kick-out side is arced, making a convex shape to the outside of the land portion (5a, 5b) toward the kick-out side in the tire rotation direction, and the side wall (50B, 50D) at the step-in side is arced, making a convex shape to the inside of the land portion (5a, 5b) toward the kick-out side in the tire rotation direction.

4. The motorcycle tire (1) according to claim 3, wherein the number of the land portions (5a, 5b) each having arced side walls at the kick-out side and the step-in side accounts for 30% or more of the total number of the land portions (5a, 5b).

5. The motorcycle tire (1) according to claim 3 or 4, wherein shoulder land portions (6a, 6b) are disposed adjacent to both sides in the tire width direction of the land portion (5a) having the arced side walls at the kick-out side and the step-in side, and divided by the width direction grooves (3a, 3b) extending in the tire width direction and at least one circumferential direction groove (4a, 4b) extending in the tire circumferential direction, and at least one of the side walls (60A, 60B, 60C, 60D) of the shoulder land portion (6a, 6b), facing the width direction groove (3a, 3b), extends on the same arc (r1, r2) of the side wall (50A, 50B) of the land portion (5a) with arced side walls at the kick-out side and the step-in side.

6. The motorcycle tire (1) according to any one of claims 1 to 5, wherein 12 or more pattern pitches are provided in the tire circumferential direction, and the pattern pitch stands for the tire circumferential direction length per unit of the tread pattern to be formed in a tire circumferential direction repeatedly, and if the tire circumferential direction length per unit of the pattern changes in the tire circumferential direction, the average length is referred to as the pattern pitch.

## Patentansprüche

1. Motorradreifen (1), der eine spezifizierte Drehrichtung aufweist, wobei der Motorradreifen (1) einen oder mehrere Stegabschnitte (5a, 5b) auf einem Mittelteil (TC) des Reifens (1) einschließt, die 50 % einer Länge des Reifens (1) auf einer Lauffläche (2) des Reifens (1) entlang eines Umfangs der Lauffläche (2) einnehmen, wobei der eine oder die mehreren Stegabschnitte (5a, 5b) durch eine Vielzahl von Breitenrichtungsrillen (3a, 3b), die sich in einer Reifenbreitenrichtung erstrecken, und eine Vielzahl von Umfangsrichtungsrillen (4a, 4b, 14a, 14b), die sich in einer Reifenumfangsrichtung erstrecken, geteilt sind, wobei der Mittelteil (TC) eine Äquatorialebene (CL) des Reifens (1) als eine Mitte des Mittelteils (TC) aufweist, wobei
mindestens einer der Stegabschnitte (5a) derart konfiguriert ist, dass, in einem umlaufenden Querschnitt des Reifens (1),
wobei H eine maximale Höhe des Stegabschnitts (5a) in einer Reifenradialrichtung ist, und ein Bezugspunkt (R) als ein Punkt 0,45 H entfernt von einer Endkante (v1) an einer Ausstoßseite hin zu einer Eintrittsseite auf einer Oberfläche des Stegabschnitts (5a) in der Drehrichtung, festgesetzt ist,
eine Beziehung D ≥ 1,7 S erfüllt ist, wo
S eine Entfernung von dem Bezugspunkt (R) bis zu der Endkante (v1) an der Ausstoßseite auf der Oberfläche des Stegabschnitts (5a) ist, und
D eine Entfernung bis zu einer Begrenzung (b1) an der Ausstoßseite, unter Begrenzungen, ist, von einem Fuß (F) einer senkrechten Linie, die eine Strecke (L2) ist, die durch den Bezugspunkt (R) hindurchgeht und senkrecht zu einer virtuellen Linie (L1) ist, die als die kürzeste Linie festgesetzt ist, die eine erste Begrenzung (b1) und eine zweite Begrenzung (b2) verbindet, wobei sich die erste Begrenzung (b1) zwischen einer Seitenwand (50A) des Stegabschnitts (5a) an der Ausstoßseite und einem unteren Teil (u1) der Vielzahl von Breitenrichtungsrillen (3a, 3b) befindet, wobei sich die zweite Begrenzung (b2) zwischen einer anderen Seitenwand (50B) des Stegabschnitts (5a) an der Eintrittsseite und dem unteren Teil (u2) der Vielzahl von Breitenrichtungsrillen (3a, 3b) befindet, wobei die beiden Seitenwände (50A, 50B) jeweiligen Breitenrichtungsrillen (3a, 3b) gegenüberliegen, wobei die unteren Teile (u1, u2) jeweils von den Breitenrichtungsrillen (3a, 3b) sind, und
wobei eine Fläche des Mittelteils (TC) mit Ausnahme der Flächen der Oberflächen der Stegabschnitte (5a, 5b) 50 % bis einschließlich 65 % einer gesamten Fläche des Mittelteils (TC) in einer ebenen Ansicht ausmacht.

2. Motorradreifen (1) nach Anspruch 1, wobei eine maximale Länge der Oberfläche des Stegabschnitts (5a) in der Reifenumfangsrichtung von 10 mm bis einschließlich 55 mm reicht.

3. Motorradreifen (1) nach Anspruch 1 oder 2, wobei die Seitenwand (50A, 50C) an der Ausstoßseite gewölbt ist, was eine konvexe Form zu der Außenseite des Stegabschnitts (5a, 5b) hin zu der Ausstoßseite in der Reifendrehrichtung ergibt, und die Seitenwand (50B, 50D) an der Eintrittsseite gewölbt ist, was eine konvexe Form zu der Innenseite des Stegabschnitts (5a, 5b) hin zu der Ausstoßseite in der Reifendrehrichtung ergibt.

4. Motorradreifen (1) nach Anspruch 3, wobei die Anzahl der Stegabschnitte (5a, 5b), die jeweils gewölbte Seitenwände an der Ausstoßseite und der Eintrittsseite aufweisen, 30 % oder mehr von der Gesamtanzahl der Stegabschnitte (5a, 5b) ausmachen.

5. Motorradreifen (1) nach Anspruch 3 oder 4, wobei Schulterstegabschnitte (6a, 6b) angrenzend an beide Seiten in der Reifenbreitenrichtung des Stegabschnitts (5a), der die gewölbten Seitenwände an der Ausstoßseite und der Eintrittsseite aufweist, angeordnet und durch die Breitenrichtungsrillen (3a, 3b), die sich in der Reifenbreitenrichtung erstrecken, und mindestens eine Umfangsrichtungsrille (4a, 4b), die sich in der Reifenumfangsrichtung erstreckt, geteilt sind, und sich mindestens eine der Seitenwände (60A, 60B, 60C, 60D) des Schulterstegabschnitts (6a, 6b), die der Breitenrichtungsrille (3a, 3b) gegenüberliegt, auf dem gleichen Bogen (r1, r2) der Seitenwand (50A, 50B) des Stegabschnitts (5a) mit gewölbten Seitenwänden an der Ausstoßseite und der Eintrittsseite erstreckt.

6. Motorradreifen (1) nach einem der Ansprüche 1 bis 5, wobei 12 oder mehr Profilteilungen in der Reifenumfangsrichtung bereitgestellt werden, und die Profilteilung für die Reifenumfangsrichtungslänge je Einheit des Laufflächenprofils steht, das wiederholt in einer Reifenumfangsrichtung zu formen ist, und falls sich die Reifenumfangsrichtungslänge je Einheit des Profils in der Reifenumfangsrichtung ändert, die durchschnittliche Länge als die Profilteilung bezeichnet wird.

## Revendications

1. Pneumatique pour motocycle (1) ayant une direction de rotation spécifiée, le pneumatique pour motocycle (1) incluant une ou plusieurs parties d'appui (5a, 5b) sur une partie centrale (TC) du pneumatique (1), occupant 50 % d'une longueur du pneumatique (1) sur une surface de bande de roulement (2) du pneumatique (1), le long d'une périphérie de la surface de bande de roulement (2), l'une ou les plusieurs parties d'appui (5a, 5b) étant divisées par une pluralité de rainures dans la direction de la largeur (3a, 3b) s'étendant dans une direction de la largeur du pneumatique, et une pluralité de rainures dans la direction circonférentielle (4a, 4b, 14a, 14b) s'étendant dans une direction circonférentielle du pneumatique, la partie centrale (TC) comportant un plan équatorial (CL) du pneumatique (1) comme centre de la partie centrale (TC), dans lequel
au moins une des parties d'appui (5a) est configurée de sorte que, dans une section transversale circonférentielle du pneumatique (1),
dans lequel H représente une hauteur maximale de la partie d'appui (5a), dans une direction radiale du pneumatique, et un point de référence (R) est fixé comme un point distant de 0,45 H d'un bord d'extrémité (v1) au niveau d'un côté de dégagement vers un côté d'engagement sur une surface de la partie d'appui (5a), dans la direction de rotation,
une relation de D ≥ 1,7 S est satisfaite, où
S représente une distance entre le point de référence (R) et le bord d'extrémité (v1) au niveau du côté de dégagement sur la surface de la partie d'appui (5a), et
D représente une distance par rapport à une limite (b1) au niveau du côté de dégagement, parmi des limites, d'un pied (F) d'une ligne perpendiculaire qui est une section (L2) passant à travers le point de référence (R) et perpendiculaire à une ligne virtuelle (L1) fixée comme la ligne la plus courte connectant une première limite (b1) et une deuxième limite (b2), la première limite (b1) se situant entre une paroi latérale (50A) de la partie d'appui (5a), au niveau du côté de dégagement, et une partie de fond (u1) de la pluralité de rainures dans la direction de la largeur (3a, 3b), la deuxième limite (b2) se situant entre une autre paroi latérale (50B) de la partie d'appui (5a), au niveau du côté d'engagement, et la partie de fond (u2) de la pluralité de rainures dans la direction de la largeur (3a, 3b), les deux parois latérales (50A, 50B) faisant face à des rainures dans la direction de la largeur respectives (3a, 3b), les parties de fond (u1, u2) appartenant respectivement aux rainures dans la direction de la largeur (3a, 3b), et
dans lequel une zone de la partie centrale (TC), à l'exception des zones des surfaces des parties d'appui (5a, 5b), représente 50 % à 65 % inclus d'une surface totale de la partie centrale (TC), dans une vue en plan.

2. Pneumatique pour motocycle (1) selon la revendication 1, dans lequel une longueur maximale de la surface de la partie d'appui (5a), dans la direction circonférentielle du pneumatique, est comprise entre 10 mm et 55 mm inclus.

3. Pneumatique pour motocycle (1) selon les revendications 1 ou 2, dans lequel la paroi latérale (50A, 50C) au niveau du côté de dégagement est arquée, créant une forme convexe par rapport à l'extérieur de la partie d'appui (5a, 5b) vers le côté de dégagement, dans la direction de rotation du pneumatique, et la paroi latérale (50B, 50D) au niveau du côté d'engagement est arquée, créant une forme convexe par rapport à l'intérieur de la partie d'appui (5a, 5b) vers le côté de dégagement, dans la direction de rotation du pneumatique.

4. Pneumatique pour motocycle (1) selon la revendication 3, dans lequel le nombre des parties d'appui (5a, 5b), comportant chacune des parois latérales arquées au niveau du côté de dégagement et du côté d'engagement, représente 30 % ou plus du nombre total des parties d'appui (5a, 5b).

5. Pneumatique pour motocycle (1) selon les revendications 3 ou 4, dans lequel des parties d'appui d'épaulement (6a, 6b) sont disposées de manière adjacente aux deux côtés, dans la direction de la largeur du pneumatique, de la partie d'appui (5a) comportant les parois latérales arquées au niveau du côté de dégagement et du côté d'engagement, et divisées par les rainures dans la direction de la largeur (3a, 3b) s'étendant dans la direction de la largeur du pneumatique, et au moins une rainure dans la direction circonférentielle (4a, 4b) s'étendant dans la direction circonférentielle du pneumatique, et au moins une des parois latérales (60A, 60B, 60C, 60D) de la partie d'appui d'épaulement (6a, 6b) faisant face à la rainure dans la direction de la largeur (3a, 3b) s'étend sur le même arc (r1, r2) de la paroi latérale (50A, 50B) de la partie d'appui (5a), avec des parois latérales arquées au niveau du côté de dégagement et du côté d'engagement.

6. Pneumatique pour motocycle (1) selon l'une quelconque des revendications 1 à 5, dans lequel 12 pas de motif ou plus sont fournis dans la direction circonférentielle du pneumatique, et le pas de motif représente la longueur, dans la direction circonférentielle du pneumatique, par unité du motif de la bande de roulement à être formé de manière répétée dans une direction circonférentielle du pneumatique, et si la longueur, dans la direction circonférentielle du pneumatique, par unité du motif change dans la direction circonférentielle du pneumatique, la longueur moyenne est appelée le pas de motif.
